# EUROPÄISCHE PATENTSCHRIFT

(11) **EP 0 471 183 B1**
(45) Veröffentlichungstag und Bekanntmachung des Hinweises auf die Patenterteilung: **22.11.1995**
(21) Anmeldenummer: 91111324.9
(22) Anmeldetag: 08.07.1991
(51) Int. Cl.: H01F 30/12, H02M 1/12, H02M 5/10

(54) **Minimierung der Netzoberwellen von Trafoschaltungen**
Minimizing network harmonics from transformer circuits
Minimisation des harmoniques du réseau provenant des circuits transformateurs

(30) Priorität: 14.08.1990 DE 4025686
(43) Veröffentlichungstag der Anmeldung: 19.02.1992
(73) Patentinhaber: TELEFUNKEN Sendertechnik GmbH, 10553 Berlin (DE)
(72) Erfinder: Beeken, Horst, Dipl.-Ing., W-1000 Berlin 20 (DE)
(74) Vertreter: Schulze, Harald Rudolf, Dipl.-Ing.

(56) Entgegenhaltungen:
- US-A- 4 500 829
- ASEA JOURNAL. Bd. 60, Nr. 3-4, 1987, OREBRO SE Seiten 26 - 31; B. GRUNDMARK: 'TRANSFORMERS FOR HVDC INSTALLATIONS'

## Beschreibung

Die Erfindung betrifft eine Stromrichterschaltung, insbesondere für einen oder mehrere Hochleistungssender, wobei jeder Sender zwei Transformatoren enthält, die aus einer dreiphasigen primärseitigen Wicklungsanordnung und mehreren sekundärseitigen dreiphasigen Wicklungsanordnungen bestehen, und bei denen jeder sekundärseitigen Wicklungsanordnung ein Brückengleichrichter mit Siebglied nachgeschaltet ist und bei denen die Spannungen der beiden primären Wicklungsanordnungen gegeneinander phasenverschoben sind. In der Stromrichtertechnik ist es wegen der Oberwellenbelastung des Netzes üblich und teilweise Vorschrift, bei Leistungen über 100 KW Schaltungen zu verwenden, die über die 6-Pulsigkeit hinausgehen. In Senderausschreibungen für Hochleistungs-Rundfunk bzw. Fernseh-Sender werden für das Betreiben eines Senders an einem Netz 12-Puls-Schaltungen und für das Betreiben zweier Sender an einem Netz 24-Pulsschaltungen gefordert. Die 12- bzw. 24-Pulsigkeit kann durch Schaltungsmaßnahmen auf der Primär- und/oder Sekundärseite der verwendeten Transformatoren realisiert werden.

Aus der DE-A- 3 907 919 ist ein Hochleistungssender bekannt, dessen Trafo eine Primärwicklung und n-Sekundärwicklungen in Sternschaltung aufweist. Es ist üblich, bei einer Anzahl von z.B. 32 benötigten Sekundärwicklungen zwei Trafcs mit jeweils einer Primärwicklung und jeweils 16 Sekundärwicklungen zu verwenden. Die 12-Pulsigkeit für einen Sender kann man dadurch erreichen, daß man die Phase zwischen der Primärwicklung des ersten Trafos und der Primärwicklung des zweiten Trafcs um 30° dreht. Dies bewirkt man üblicherweise dadurch, daß man die eine Primärwicklung in Stern und die andere Primärwicklung im Dreieck schaltet. Bei zwei Sendern und einer geforderten 24-Pulsigkeit reichen Maßnahmen wie eine Stern-Dreieckschaltung auf der Primärseite nicht mehr aus. Bekannt ist zusätzlich zur Stern-Dreieckschaltung des ersten Senders die Phase des zweiten Sender mittels Zickzack und/oder Polygonschaltungen so zwischen die Stern- und Dreieckschaltungen zu legen, daß eine 24-Pulsigkeit entsteht.

Der Nachteil der Stern-, Dreieck-, Zickzack- und Polygonschaltungen besteht zum einen darin, daß insgesamt vier verschiedene Trafos zum Erreichen der 24-Pulsigkeit beim Betreiben von zwei Sendern aus dem gleichen Netz erforderlich sind. Weiterhin erfordern Zickzack- und Polygonschaltungen zwei getrennte Wicklungen je Schenkel, die die volle Hochspannungsisolierung benötigen und somit teuerer sind und zusätzlichen Platz beanspruchen.

Aus dem ASEA JOURNAL Bd 60, NR. 3-4, 1987, Orebro SE, Seiten 26-31; B.GRUNDMARK und G.JORENDAL: "Transformers for HVDC installations" ist eine Stromrichterschaltung bekannt, die zwei Transformatoren mit jeweils einer primärseitigen, dreiphasigen Wicklungsanordnung und wenigstens jeweils einer dreiphasigen, sekundären Wicklungsanordnung aufweist, wobei jeder sekundärseitigen Wicklungsanordnung ein Brückengleichrichter nachgeschaltet ist und die Spannungen der beiden sekundärseitigen Wicklungsanordnungen gegeneinander verschoben sind. Die beiden sekundärseitigen Wicklungsanordnungen sind im Stern geschaltet und zur Phasenverschiebung auf der Sekundärseite ist in jede Sternschaltung jeweils eine Dreieckschaltung integriert, deren Größe sich nach der gewünschten Phasendrehung (hier 15 Grad) richtet.

Die US-A-4 500 829 zeigt einen Phasendreh-Transformator, in dem zum Zwecke der Phasendrehung auf der Primärseite eine Dreieckschaltung in die Sternschaltung der dreiphasigen Wicklung integriert ist.

Der Erfindung liegt daher die Aufgabe zugrunde, Transformatorschaltungen anzugeben, die mit wenig verschiedenen Typen eine 24-Pulsigkeit beim Betreiben von zwei Sendern an einem Netz liefern und deren Wicklungen auf einem Schenkel keine zusätzliche Isolation benötigen. Erfindungsgemäß wird die Aufgabe durch die Merkmale des Anspruchs 1 gelöst, wobei man auf jeder Primärseite der Trafos eine Dreieckschaltung in eine Sternschaltung integriert und je nach Größe der Dreieckschaltung eine bestimmte Phasendrehung erreicht. Durch die Auswahl bestimmter Drehwinkel ist es erfindungsgemäß dann möglich, bei einem zweiten Sender dieselben beiden Trafotypen wie bei dem ersten Sender zu verwenden und durch Vertauschen von zwei Versorgungsstromleitern am Trafoeingang die Phase so zu drehen, daß insgesamt eine 24-Pulsschaltung entsteht. Die Phasendrehung läßt sich so einstellen, daß sie zu einem kleinen Stromklirrfaktor führt.

Die Erfindung wird nachfolgend beispielhaft anhand der Figuren näher beschrieben.
- Fig. 1: zeigt das Schaltbild der Primärwicklung und der Sekundärwicklungen mit nachgeschalteten Brückengleichrichtern des ersten Trafos des ersten oder einzigen Senders,
- Fig. 2: zeigt das zu Fig. 1 gehörige Spannungsdiagramm,
- Fig. 3: zeigt das Schaltbild der Primärwicklung und der Sekundärwicklungen mit nachgeschalteten Brückengleichrichtern des zweiten Trafos des ersten oder einzigen Senders,
- Fig. 4: zeigt das zu Fig. 3 gehörige Spannungsdiagramm,
- Fig. 5: zeigt das Schaltbild der Primärwicklung und der Sekundärwicklungen des ersten Trafos des zweiten Senders,
- Fig. 6: zeigt das zu Fig. 5 gehörige Spannungsdiagramm,
- Fig. 7: zeigt das Schaltbild der Primärwicklung und der Sekundärwicklungen des zweiten Trafos des zweiten Senders,
- Fig. 8: zeigt das zu Fig. 7 gehörige Spannungsdiagramm.

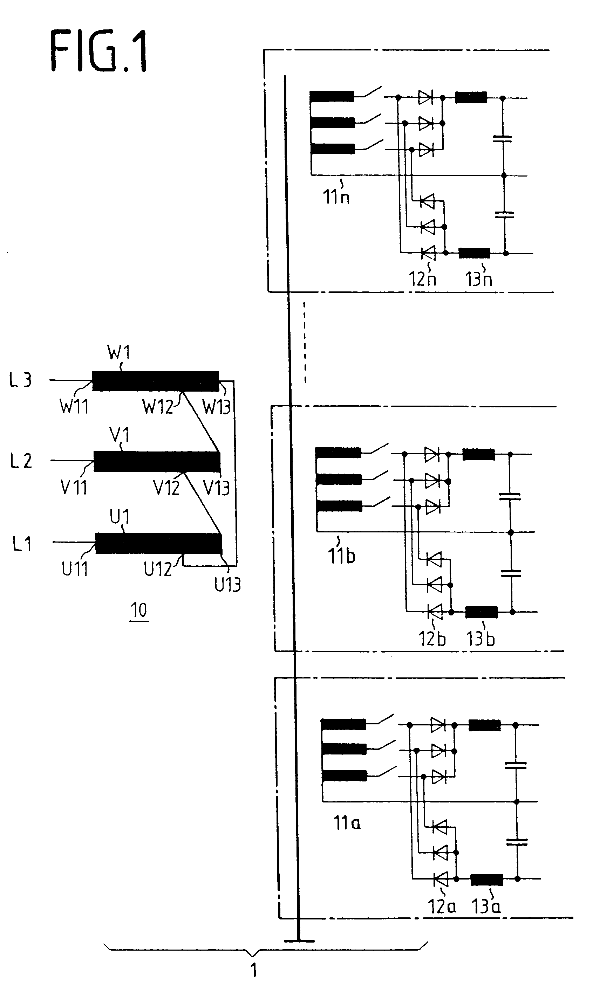

In Fig. 1 enthält ein Transformator 1 eine dreiphasige primärseitige Wicklungsanordnung 10, die aus den Wicklungen U1, V1, W1 besteht. Diese Wicklungen weisen die Anzapfungen U12, V12 und W12 auf. Diese Anzapfungen sind im Dreieck mit den Wicklungsenden U13, V13 und W13 geschaltet. Von den Anzapfungen zu dem jeweiligen Wicklungsanfang U11, V11, und W11 liegt eine Sternschaltung vor. Je nach Lage der Anzapfungen läßt sich die Phase zwischen 0 und 30° gegenüber einer reinen Stern- bzw. einer Dreieckschaltung drehen. Die sekundären Wicklungsanordnungen 11a-11n sind im Stern geschaltet. Ihnen sind die Brückengleichrichter 12a-12n und Siebmittel 13a-13n nachgeschaltet.

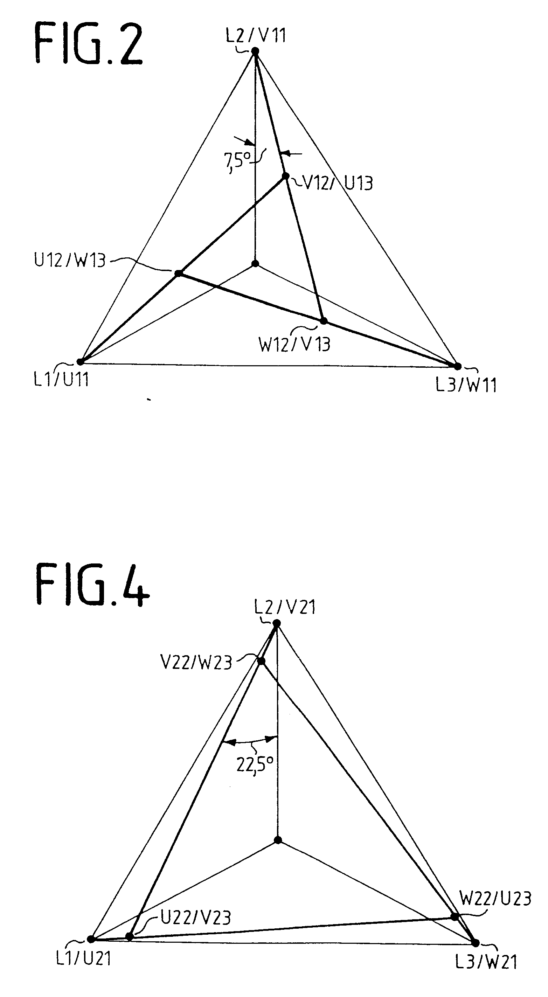

Aus dem Diagramm in Fig. 2 ersieht man, daß durch die in die Sternschaltung integrierte Dreieckschaltung die Phase um 7,5° gegenüber der reinen Sternschaltung gedreht wird.

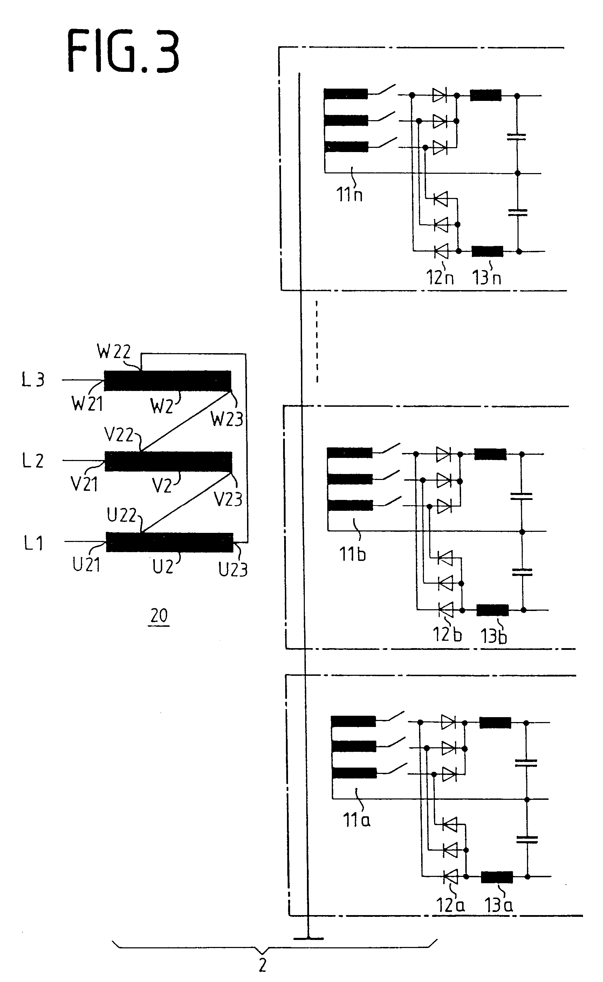

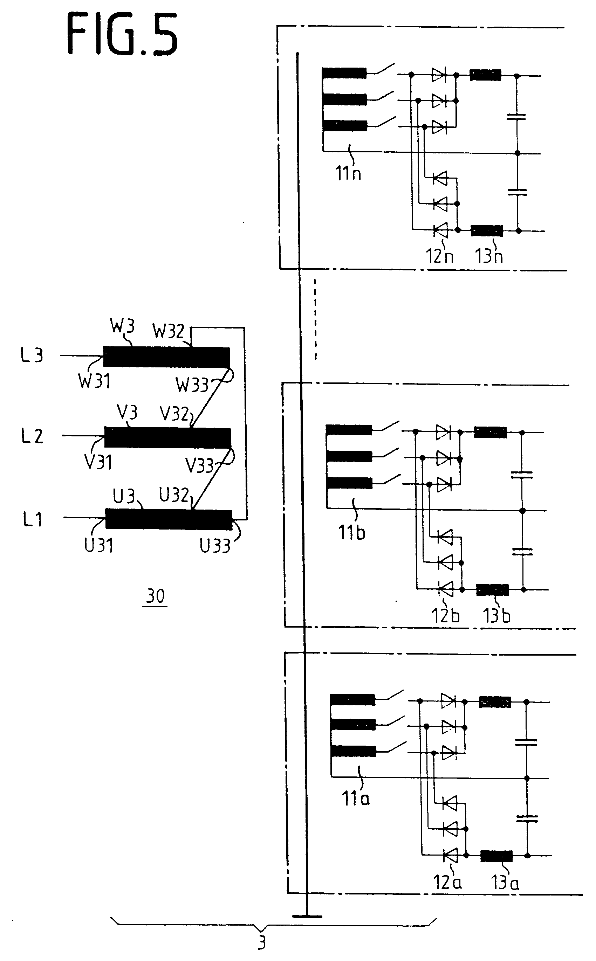

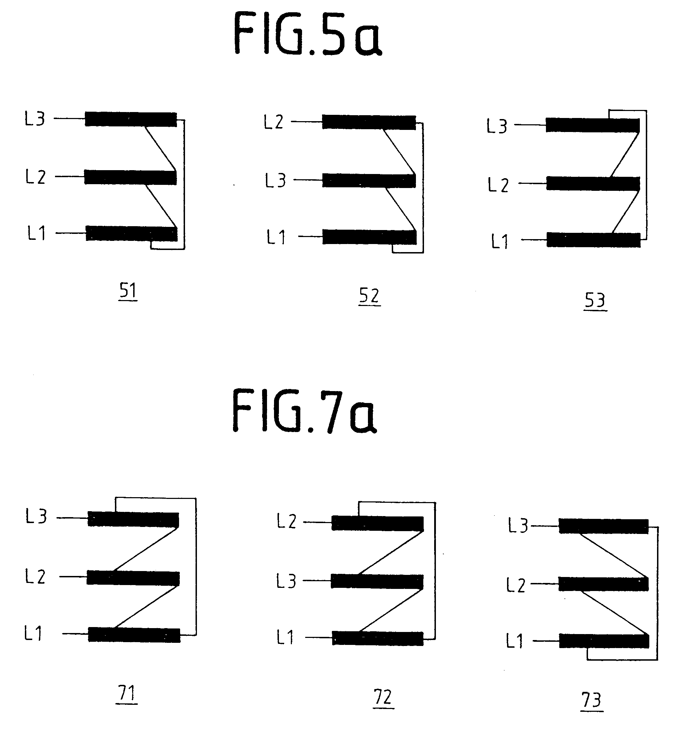

Der Transformator 2 in Fig. 3 enthält eine dreiphasige primärseitige Wicklungsanordnung 20, die aus den Wicklungen U2, V2 und W2 besteht. Diese Wicklungen weisen die Anzapfungen U22, V22 und W22 auf. Diese Anzapfungen sind im Dreieck mit den Wicklungsenden U23, V23 und W23 geschaltet. Von den Anzapfungen zu dem jeweiligen Wicklungsanfang U21, V21, W21 liegt eine Sternschaltung vor. Im Unterschied zu Primärwicklung 10 fällt hier die sich ergebende Dreieckschaltung größer und die verbleibende Sternschaltung kleiner aus. Aus dem Diagramm in Fig. 4 ersieht man, daß die Phase gegenüber der ursprünglichen Sternschaltung um - 22,5° gedreht wird. Das negative Vorzeichen des Drehwinkels rührt von dem anderen Drehsinn: Bei Trafo 20 sind U22 mit V23, V22 mit W23 und W22 mit U23 verbunden, während bei Trafo 10 U12 mit W13, V12 mit U13 und W12 mit V13 verbunden sind. Die Sekundärseite des Trafos 2 entspricht der des Trafo 1; ebenso die nachfolgenden Brückengleichrichter und Siebmittel.

Werden jetzt Trafo 1 und Trafo 2 zusammen an einem Netz betrieben, so sind ihre Phasen gegeneinander um 30° gegeneinander verschoben (+7,5°; -22,5°), so daß ein 12-pulsiges System entsteht und die Oberwellenbelastung des Netzes gegenüber einem 6-pulsigen System wesentlich verringert wird.

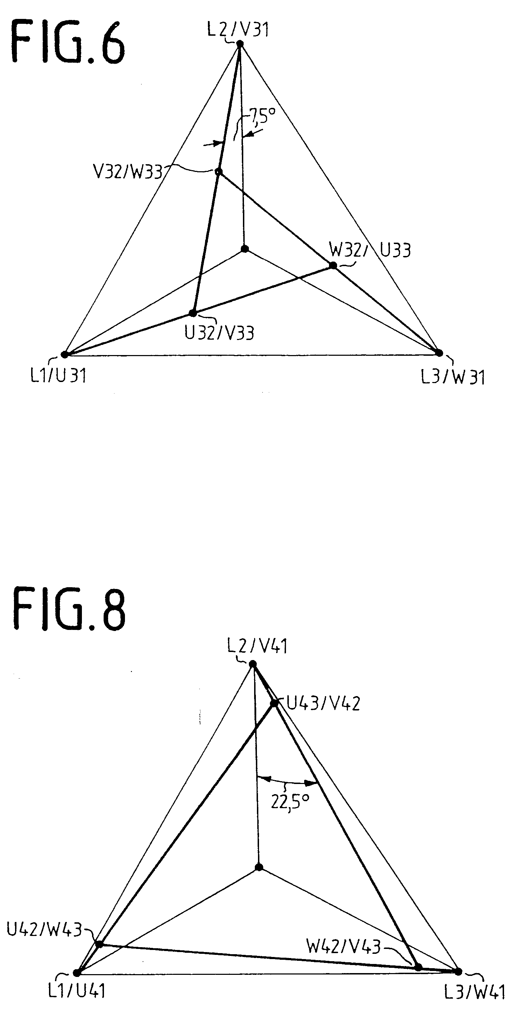

Die Primärwicklungen U3, V3 und W3 von Trafo 3 in Fig. 5 haben die gleichen Anzapfungen wie die Primärwicklungen U1, V1 und W1 von Trafo 1. Der Drehsinn ist jedoch vertauscht, so daß sich eine Phasendrehung von -7,5° gegenüber der ursprünglichen Sternschaltung einstellt, wie aus Fig. 6 ersichtlich ist. Man kann jedoch für Trafos der Schaltbilder nach Fig. 1 und 5 identisch aufgebaute Trafos verwenden, indem man den Anschluß des einen Trafos an das Netz mit dem richtigen Drehsinn ausführt und beim anderen Trafo zwei Phasen vertauscht. Fig. 5a verdeutlicht dies: Die Schaltung 51 stellt die Schaltung der Primärseite 10 von Trafo 1 dar. Vertauscht man nun Leiter L2 mit Leiter L3, so erhält man die Schaltung 52. Bringt man die so erhaltene Schaltung wieder in die gewohnte Darstellungsweise, so ergibt sich Schaltung 53, die mit der Schaltung der Primärwicklungsanordnung 30 von Trafo 3 übereinstimmt. Die Sekundärseite von Trafo 3 entspricht der von Trafo 1; ebenso die nachfolgenden Brückengleichrichter und Siebmittel.

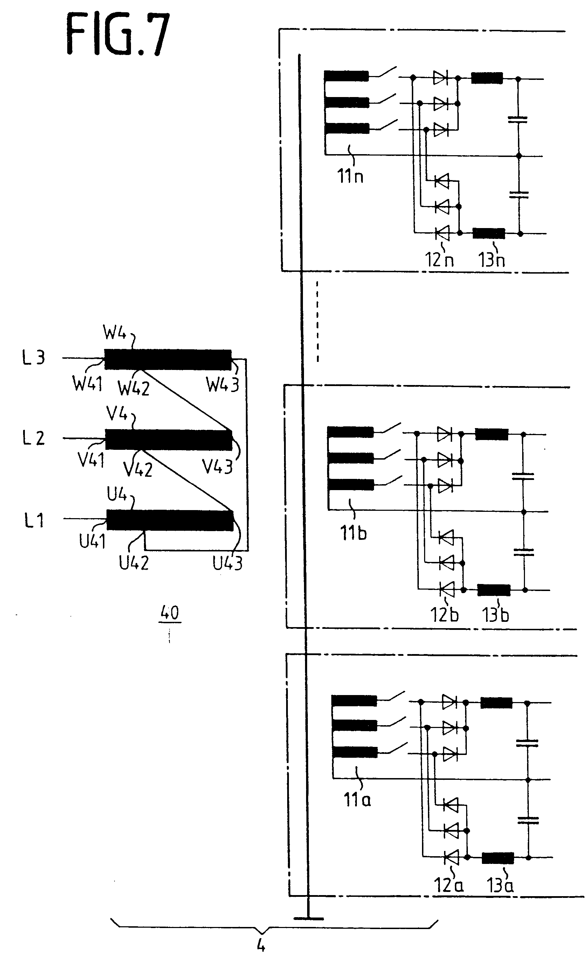

Die Primärwicklungen U4, V4 und W4 von Trafo 4 in Fig. 7 haben die gleichen Anzapfungen wie die Primärwicklungen U2, V2 und W2 von Trafo 2. Ihr Drehsinn ist jedoch vertauscht, so daß sich eine Phasendrehung von +22,5° gegenüber der ursprünglichen Sternschaltung einstellt, wie aus Fig. 8 ersichtlich. Auch hier kann man für Trafos nach den Schaltbildern 3 und 7 identische Trafos verwenden. Man muß nur wiederum bei einem Trafo zwei Phasen vertauschen, wie Fig. 7a deutlich macht:
Die Schaltung 71 stellt die Primärwicklung 20 von Trafo 2 dar. Bei Schaltung 72 werden die Leiter L2 und L3 vertauscht und Schaltung 73 zeigt die gewohnte Darstellungsweise.

Bei Verwendung der Trafoschaltungen nach den Figuren 1, 3, 5 und 7 an einem Netz erhält man insgesamt Phasendrehungen von 7,5°; -22.5°; -7.5°; 22.5°. Es sind also alle Phasen untereinander um 15° verschoben. Somit ergibt sich wegen 360°: 15°=24 eine 24-Pulsschaltung beim Betreiben von zwei Sendern an einem Netz.

Somit sind also nur zwei verschiedene Trafotypen erforderlich, um eine 24-Pulsschaltung beim Betreiben von zwei Sendern an einem Netz zu erreichen. Durch den einfachen Aufbau mittels Anzapfung sind keine zusätzlichen Hochspannungsisolationen zwischen zwei getrennten Wicklungen, die auf einem Schenkel angebracht sind, erforderlich, wie dies bei den aus der Literatur bekannten Zickzack- oder Polygonschaltungen der Fall ist. Der erfindungsgemäße Aufbau der Transformatoren mittels einfacher Anzapfungen erleichtert auch die Ausführung der Transformatoren in Gießharzausführung.

## Patentansprüche

1. Stromrichterschaltung, für zwei parallele Hochleistungssender mit einer Transformatorschaltung mit Phasendrehung in der die primärseitigen, dreiphasigen Transformatorwicklungen (10, 20,30,40) im Stern geschaltet sind und in die Sternschaltungen jeweils eine Dreieckschaltung (U12,V12,W12,U13,V13, W13, . . .U42,V42,W42,U43,V43,W43) integriert ist, deren Größe sich nach der jeweils gewünschten Phasendrehung richtet, und,
wobei vier Transformatoren (1,2,3,4) mit jeweils einer dreiphasigen, primärseitigen Wicklungsanordnung (10,20,30,40) und jeweils wenigstens einer dreiphasigen, sekundären Wicklungsanordnung (11a...11n) vorhanden sind und jeder sekundärseitigen Wicklungsanordnung ein Brückengleichrichter (12a... 12n) mit Siebglied (13a...13n) nachgeschaltet ist,
wobei zwei der vier primärseitigen Wicklungen (10,30) die Phase jeweils um einen Betrag von 7,5 Grad drehen,
wobei die anderen zwei primärseitigen Wicklungen (20,40) die Phase jeweils um einen Betrag von 22,5 Grad drehen und
und wobei die vier Transformatoren (1,2,3,4) so an das Netz angeschlossen sind, daß sich unter geeignetem Anschluß der Versorgungsleitungen (L1,L2,L3) eine Phasendifferenz zwischen den Transformatoren von 15 Grad ergibt und so eine 24-Pulsschaltung erreicht ist.

2. Transformatorschaltung nach Anspruch 1, dadurch gekennzeichnet, daß die in die Sternschaltung integrierte Dreieckschaltung mittels einfacher Anzapfungen (U12,V12,W12...U42, V42,W42) realisiert ist.

## Claims

1. Rectifier circuit for two parallel heavy-duty transmitters, with a transformer circuit with phase rotation, in which the three-phase transformer windings (10, 20, 30, 40) at the primary side are connected in star form and a respective delta circuit (U12, V12, W12, U13, V13, W13, ...U42, V42, W42, U43, V43, W43), the magnitude of which depends on the respectively desired phase rotation, is integrated in each of the star circuits, and four transformers (1, 2, 3, 4) each with a respective three-phase winding arrangement (10, 20, 30, 40) at the primary side and at least one respective three-phase secondary winding arrangement (11a...11n) are present, and a bridge rectifier (12a...12n) with a filter section (13a...13n) is connected behind each winding arrangement at the secondary side, wherein two of the four windings (10, 30) at the primary side rotate the phase each time by an amount of 7.5 degrees, wherein the other two windings (20, 40) at the primary side rotate the phase each time by an amount of 22.5 degrees and wherein the four transformers (1, 2, 3, 4) are so connected to the mains that with appropriate connection of the supply lines (L1, L2, L3) a phase difference of 15 degrees results between the transformers and thus a 24 pulse circuit is obtained.

2. Transformer circuit according to claim 1, characterised thereby that the delta circuit integrated in the star circuit is realised by means of simple taps (U12, V12, W12...U42, V42, W42).

## Revendications

1. Circuit convertisseur de courant, pour deux émetteurs à puissance élevée parallèles, équipé d'un circuit à transformateurs avec rotation de phase, dans lequel les enroulements triphasés, primaires du transformateur (10, 20, 30, 40) sont montés en étoile et dans les circuits en étoile est intégré respectivement un circuit en triangle (U12, V12, W12, U13, V13, W13,..., U42, V42, W42, U43, V43, W43), dont la grandeur correspond à la rotation de phase souhaitée respective, et quatre transformateurs (1, 2, 3, 4) avec chacun un enroulement primaire triphasé (10, 20, 30, 40) et respectivement au moins un enroulement secondaire triphasé (11a,...11n) sont prévus et en aval de chaque enroulement secondaire est disposé un redresseur en pont (12a...12n) avec un élément de filtrage (13a..13n),
deux des quatre enroulements primaires (10, 30) font tourner la phase respectivement d'une quantité de 7,5°,
les deux autres enroulements primaires (20, 40) font tourner la phase respectivement d'une quantité de 22,5° et
les quatre transformateurs (1, 2, 3, 4) sont raccordés au réseau, par raccordement approprié des lignes d'alimentation (L1, L2, L3), une différence de phase entre les transformateurs de 15° est obtenue et ainsi un circuit à 24 impulsions.

2. Circuit à transformateurs selon la revendication 1, caractérisé en ce que le circuit en triangle intégré dans le circuit en étoile est réalisé au moyen de prises simples (U12, V12, W12....U42, V42, W42).
